# EUROPÄISCHE PATENTSCHRIFT

(11) **EP 1 045 886 B1**
(45) Veröffentlichungstag und Bekanntmachung des Hinweises auf die Patenterteilung: **24.09.2003**
(21) Anmeldenummer: 98966666.4
(22) Anmeldetag: 23.12.1998
(51) Int. Cl.: C09J 4/06, C09J 175/16

(54) **VERWENDUNG AUSGEWÄHLTER KLEBSTOFFGEMISCHE FÜR DIE ÜBERLAPPUNGSVERKLEBUNG VON RUNDUMETIKETTEN BEI IHREM AUFTRAG AUF KUNSTSTOFF-FLASCHEN**
USE OF SELECTED ADHESIVE MIXTURES FOR OVERLAP ADHESION OF ROUND LABELS WHEN APPLIED TO PLASTIC BOTTLES
UTILISATION DE MELANGES ADHESIFS SELECTIONNES POUR LE COLLAGE PAR RECOUVREMENT D'ETIQUETTES CIRCULAIRES LORS DE LEUR APPLICATION SUR DES BOUTEILLES EN MATIERE PLASTIQUE

(30) Priorität: 10.01.1998 DE 19800676
(43) Veröffentlichungstag der Anmeldung: 25.10.2000
(73) Patentinhaber: Henkel Kommanditgesellschaft auf Aktien, 40589 Düsseldorf-Holthausen (DE)
(72) Erfinder: PÜRKNER, Eckhard, D-40595 Düsseldorf (DE); FERENCZ, Andreas, D-40223 Düsseldorf (DE); HEEMANN, Marcus, D-40225 Düsseldorf (DE); HUVER, Thomas, D-40625 Düsseldorf (DE); ONUSSEIT, Hermann, D-42781 Haan (DE)
(86) Internationale Anmeldenummer: EP9808423
(87) Internationale Veröffentlichungsnummer: WO99035199

(56) Entgegenhaltungen:
- EP-A- 0 564 483
- EP-A- 0 603 046
- WO-A-97/01483

## Beschreibung

Die vorliegende Erfindung betrifft den Einsatz ausgewählter Klebstoffsysteme zum Verkleben von sogenannten Rundumetiketten mittels eines Überlappungsklebstoffes bei ihrem Aufbringen auf Kunststoffhohlkörper, insbesondere Kunststoff-Flaschen.

Die heute ständig wachsende Menge von Kunststoff-Flaschen - besonders auf Basis von PET (Polyethylenterephthalat) - in der Getränkeindustrie wird vor allem durch 3 wesentliche Vorteile der Kunststoffe gegenüber der Glasflasche bewirkt: Das deutlich geringere Gewicht, der Umstand, daß Kunststoff-Flaschen nicht zersplittern können sowie die Verringerung des Transportgewichtes, insbesondere des Leergutes. Verbunden damit ist die Möglichkeit der mehrfachen Wiederverwendung der Kunststoff-Flasche. Voraussetzung hierfür ist die absolut eindeutige und saubere Entfernung aller Rückstände, nicht nur im Flascheninneren sondern auch auf der Außenfläche. Hier besteht insbesondere die Aufgabe, die zur Kennzeichnung des Flascheninhaltes eingesetzten Etiketten und die dabei mitverwendeten Klebstoffe beziehungsweise Reste der hier angesprochenen Bestandteile zuverlässig entfernen zu können.

Die für die Abfüllung von insbesondere kohlensäurehaltigen Erfrischungsgetränken eingesetzten Kunststoff-Flaschen wurden ursprünglich mit sogenannten Schildetiketten etikettiert. Hier muß Klebstoff unmittelbar zwischen Etikett und Flaschenaußenfläche aufgetragen werden. Um damit verbundene Nachteile zu verringern wird heute bei zylindrischen Flaschenformen häufig auch mit Rundumetiketten gearbeitet. Hierbei handelt es sich um Etiketten, die den Umfang der Flasche vollständig umschließen. Bei dieser Art der Etikettierung ist es notwendig, die Etiketten zunächst auf der Flaschenwand zu fixieren, was beispielsweise durch sogenannte Pick-up-Klebstoffe, aber auch durch eine einfache Ausbildung einer Feuchteschicht auf der Flaschenaußenfläche erfolgen kann. Anschließend wird die überlappende Verklebung vorgenommen, d.h. das Ende des Etiketts wird unter Mitverwendung eines geeigneten Klebstoffes auf dem Beginn des Etiketts fixiert, ohne dabei unmittelbaren Kontakt zwischen Flaschenaußenfläche und Klebstoffbereich auszubilden.

Folienetiketten der hier betroffenen Art sind heute weitaus überwiegend auf Kunststoffbasis aufgebaut. Sie werden als Folienrolle angeliefert und erst in der Rollenetikettiermaschine im kontinuierlichen Arbeitsgang zur Einzeletikette geschnitten. Die heutige Technologie dieser Kunststoff-Flaschenetikettierung sieht dabei hohe Durchsatzmengen pro Zeiteinheit vor, so daß beispielsweise 6 bis 10 Flaschen pro Sekunde im maschinellen Betrieb mit Rundumetiketten versehen werden. Es leuchtet sofort ein, daß unter diesen Voraussetzungen an den in Streifenform auf das Etikettenende aufzutragenden Überlappungsklebstoff hohe und sehr vielgestaltige Anforderungen gestellt werden. Der rasche und störungsfreie maschinelle Auftrag - ohne Ausbildung von Problemen wie Fadenziehen - verbunden mit hinreichender Haftung unmittelbar nach dem Fügen der beiden zu vereinigenden Etikettenenden sind unverzichtbare Voraussetzungen. Das Anforderungsprofil an den Überlappungsklebstoff ist aber sehr viel größer. Lediglich beispielhaft seien hier die folgenden Problembereiche benannt: Die Aushärtung der Klebstoffuge und ihre Festigkeit muß den auf das Rundumetikett einwirkenden Kräften nachhaltig standhalten können. Klebersysteme heute üblicher Art bilden beim hier betroffenen Einsatz häufig im aufgetrockneten Zustand gerippte oder gewellte Klebstoffugen die unerwünscht sind. Insbesondere liegt aber einer der größten Problembereiche in der Tatsache, daß der Flascheninnendruck substantiellen Schwankungen unterworfen sein kann, insbesondere bei der Abfüllung der Flaschen mit kohlensäurehaltigen Getränken. Unvermeidbare Temperaturschwankungen bei Lagerung und Transport der abgefüllten und verschlossenen Flaschen führen zu entsprechenden lnnendruckschwankungen. Die dünnwandige Kunststoff-Flasche arbeitet - im Gegensatz zur alten Glasflasche - hier in gewissem Ausmaße mittels Volumenanpassung mit. Es leuchtet sofort ein, daß hierdurch sehr hohe Zugbelastungen auf die Klebstoffuge des aufgebrachten Rundumetiketts ausgelöst werden.

Das Ergebnis solcher Prozesse ist häufig eine partielle Verschiebung der haftfest miteinander verbundenen Etikettenenden gegeneinander, die dann leicht zur partiellen Freigabe von Kleberanteilen an die sichtbare Außenfläche des Rundumetiketts führt. Diese sichtbar werdenden Bereiche des Klebestreifens sind besonders stark verschmutzungsgefährdet und dementsprechend unerwünscht.

Die erfindungsgemäße Lehre geht dementsprechend von der Aufgabe aus, Klebstoffe bzw. Klebstoffsysteme zur Verfügung zu stellen, die auf dem hier angesprochenen Gebiet der Etikettierung von Kunststoff-Flaschen mit Rundumetiketten mit besonderem Vorteil als sogenannte Überlappungsklebstoffe eingesetzt werden können.

### Gegenstand der Erfindung

Erfindungsgegenstand ist damit die Verwendung von mehrstufig abreagierenden Reaktiv-Klebern auf Basis härtbarer mehrfunktioneller Makro-Monomerverbindungen - im nachfolgenden auch als "mehrfunktionelle Makromere" bezeichnet -, die in ihrer Molekülstruktur Feuchtigkeits-härtende Isocyanatgruppen wenigstens anteilig zusammen mit olefinisch ungesättigten radikalisch reaktiven Gruppen enthalten, als reaktive und dabei nach unterschiedlichen Reaktionsmechanismen härtbare Binderkomponenten - im nachfolgenden als "Binderkomponenten A" bezeichnet - in Überlappungsklebstoffen für den Auftrag von Rundumetiketten auf Kunststoff-Flaschen.

Gegenstand der Erfindung ist dabei insbesondere die Verwendung der im nachfolgenden geschilderten Mehrkomponentengemische auf Basis der Binderkomponenten A in Abmischung mit weiteren Binderkomponenten.

### Einzelheiten zur erfindungsgemäßen Lehre

Zur verbesserten technischen Lösung der eingangs angesprochenen vielgestaltigen Probleme im hier betroffenen Arbeitsbereich hat sich die Verwendung ausgewählter Klebstoffe bzw. Klebstoffkomponenten aus dem Bereich der sogenannten dual-cure-Kleber als hilfreich erwiesen. Die als Binderkomponente A gekennzeichnete Klasse aus dem Bereich der Kleberwertstoffe zeichnet sich dadurch aus, daß ihr Härtungsmechanismus einerseits eine Molekülvergrößerung über die Abreaktion radikalisch reaktiver olefinisch ungesättigter Gruppen im Makromerenmolekül ermöglicht, daß andererseits aber aufgrund vorliegender freier Isocyanatgruppen im mehrfunktionellen Makromeren beziehungsweise Makromeren-Gemisch eine zusätzliche Abbindung unter Molekülvergrößerung durch Einwirkung von Feuchte gewährleistet ist.

Die DE-OS 29 13 676 beschreibt ein Verfahren zur Herstellung von Verbundfolien mittels lösemittelfreier Klebstoffe. Beschrieben wird insbesondere ein bei Raumtemperatur flüssiger Klebstoff, der aus oligomeren und/oder polymeren Estern und/oder Ethern, besteht, die sowohl freie tsocyanatgruppen als auch freie (Meth)acrylatgruppen in einem Molekül enthalten. Die Lehre der EP-B1 0 564 483 betrifft Reaktivkontaktkleber, Verfahren zu ihrer Herstellung und ihre Verwendung. Die Druckschrift beschreibt zweistufig härtbare Beschichtungsmassen auf Urethanbasis, die durch einen Gehalt an UV-härtbaren Acrylatgruppen im Rahmen einer ersten Härtungsstufe zu einem verfestigten, jedoch noch strukturgebend verformbaren bzw. prägbaren Material ausgehärtet werden können, worauf in einer nachfolgenden zweiten Stufe die irreversible Verfestigung erfolgt. Zur Viskositätsabsenkung können dem Klebstoff monofunktionelle Acrylate zugegeben werden. Als Verwendungszweck des dort beschriebenen Kontaktklebers wird die Verklebung von. Holz und/oder Kunststoffteilen bei Temperaturen bis zu etwa 70°C, vorzugsweise bei Raumtemperatur, genannt. Keine dieser Literaturstellen offenbart jedoch die Verwendung solcher mehrstufig abreagierender und multifunktionell ausgestalteter Makromer-Moleküle im Zusammenhang mit ihrem Einsatz als reaktive Binderkomponente in Überlappungsklebstoffen der erfindungsgemäß betroffenen Art für den Auftrag von Rundumetiketten auf Kunststoff-Flaschen. Keine dieser Druckschriften beschreibt insbesondere die im nachfolgenden im einzelnen dargestellten Mehrkomponentengemische und die erfindungsgemäß bevorzugt eingesetzten Mischungskomponenten als weitere Bestandteile der Klebstoffmassen für das Einsatzgebiet der Erfindung.

Die erfindungsgemäß als "Binderkomponenten A" bezeichneten Anteile der zum Einsatz kommenden Reaktivkleber sind in der Regel Mehrkomponentengemische aus den beiden nachfolgenden Typen von mehrfunktionellen Makromeren: Die eine Wertstoffklasse enthält in ihrer Molekülstruktur zusammen mit Feuchtigkeits-härtenden Isocyanatgruppen die nach dem radikalischen Mechanismus abreagierenden olefinisch ungesättigten reaktiven Gruppen. Vertreter dieser Art sind in der Reaktionskomponente A im allgemeinen in Abmischung mit mehrfunktionellen Makromeren kombiniert, die in ihrer Molekülstruktur Feuchtigkeits-härtende Isocyanatgruppen ohne die gleichzeitige Anbindung der radikalisch reaktiven olefinisch ungesättigten Gruppen enthalten. Weiterführende Angaben zu Art, Mengenverhältnis und Herstellung solcher Makromer-Gemische als Reaktionskomponente A werden im nachfolgenden noch gegeben.

In der erfindungsgemäß bevorzugten Ausführungsform werden die Binderkomponenten A in Abmischung mit einer weiteren reaktiven Stoffklasse eingesetzt, die im nachfolgenden als "Binderkomponente B" bezeichnet wird. Dabei können als Binderkomponente B sowohl ausgewählte bestimmte Vertreter der im nachfolgenden geschilderten Stoffklasse zum Einsatz kommen als auch Abmischungen unterschiedlicher Vertreter dieser Stoffklasse. Das Charakteristikum der Binderkomponenten B ist, daß es sich auch hier um Reaktivharze handelt, die jetzt aber nach nur einem Reaktionsmechanismus abreagieren. Der erfindungsgemäß ausgewählte Reaktionsmechanismus zur Binderkomponente B ist die radikalische Abreaktion. Dabei gilt im einzelnen:

In Abmischung mit der Binderkomponente A werden erfindungsgemäß 1- und/oder bevorzugt mehrfunktionell radikalisch reaktive Mischkomponenten als Binderkomponente B eingesetzt, die von Isocyanatgruppen frei sind. Die erfindungsgemäß besonders bevorzugte Klasse dieser Zusatzkomponenten sind radikalisch bifunktionell ausgebildete Verbindungen, die auch gegebenenfalls in Abmischung mit - bevorzugt untergeordneten Mengen - an höherfunktionell radikalisch ausgebildeten Vertretern dieser Art vorliegen können. Hier sind insbesondere entsprechende trifunktionell radikalisch genannte Mischkomponenten zu berücksichtigen.

Die technische Bedeutung dieses gemeinsamen Einsatzes von Binderkomponenten A und Binderkomponenten B wird anhand der Schilderung des erfindungsgemäß zu bewältigenden komplexen Problembereiches verständlich:

Die zuvor erwähnte extrem hohe Arbeitsgeschwindigkeit bei der Ausrüstung der Kunststoff-Flaschen mit den Rundumetiketten fordert für den Klebstoffauftrag eine möglichst niedrigviskose dünn und dabei schnell verstreichbare Beschaffenheit der Klebstoffmasse. Unerwünschte Nebeneffekte wie Fadenziehen und dergleichen dürfen nicht auftreten. Nach Ablauf eines sehr kurzen Zeitintervalls erfolgt dann aber schon das Fügen der beiden Enden des jeweiligen Rundumetiketts. In dieser Arbeitsphase muß die aufgetragene dünne Klebstoffschicht eine mindestens so hinreichende Haftklebrigkeit aufweisen, daß in dieser Frühphase ein eventuell auch nur anteiliges Wiederaufklappen des Verklebungsbereiches ausgeschlossen ist. Die volle Ausbildung der im späteren Gebrauch geforderten Klebkraft kann dann in einer nachfolgenden vergleichsweise längeren Zeitphase stattfinden. Eine der Hauptschwierigkeiten liegt also insbesondere in den sich wiedersprechenden Anforderungen des Frühbereiches der Verklebungsausbildung.

Die erfindungsgemäße Lehre schafft die Möglichkeit, insbesondere durch den Einsatz der drei nachfolgenden Arbeits- und Sachparameter, hier zu einer Optimierung zu kommen.

Die Binderkomponente A ist wenigstens anteilig bezüglich ihrer Härtungsmechanismen bifunktionell ausgebildet. Der eine Reaktionsmechanismus - die radikalische Reaktion - ist durch Auswahl der Arbeitsbedingungen - hier insbesondere Strahlungseinwirkung und/oder Mitverwendung von radikalbildenden Initiatoren - zur unmittelbaren Auslösung zu bringen. Verbunden damit ist die angestrebte Molekülvergrößerung und die damit wiederum verbundene Steigerung der Haftklebrigkeit in der Kleberoberflächenschicht und Erhöhung der Bindefestigkeit innerhalb der Kleberschicht. Zur Verstärkung dieser ersten Reaktionsstufe innerhalb des zur Verfügung stehenden sehr kurzen Zeitabschnitts sieht die erfindungsgemäße Lehre in ihrer bevorzugten Ausführungsform die Mitverwendung der Kleberkomponenten B vor. Hier steht als Reaktionsmechanismus ausschließlich der kurzfristig anzuregende und schnell ablaufende radikalische Bindevorgang zur Verfügung. Durch Mitverwendung schon beschränkter Mengen von radikalisch mehrfunktionellen Binderkomponenten B wird gleichwohl eine deutliche Anhebung des Abbindezustandes in dieser ersten kurzfristigen Phase der Klebstoffanwendung erreicht. Das allgemeine Fachwissen macht es verständlich, daß als Mischkomponenten zu B besondere Bedeutung radikalisch bifunktionellen Komponenten zukommen kann. Sie erhöhen in der kurzen zur Verfügung stehenden Zeitspanne substantiell die angestrebte Molekülvergrößerung und damit Verstärkung der Haftklebrigkeit, ohne letztlich zu einer unerwünschten Verhärtung oder gar Versprödung der Klebstoffmasse zu führen.

Die Ausbildung der letztlich geforderten mehrfunktionalen Vernetzung der Klebstoffmasse kann dann über den Mechanismus der Feuchtigkeitshärtung mittels der freien lsocyanatgruppen der Binderkomponente A erfolgen.

Schließlich ist im Zusammenhang gerade mit der Frühphase des Klebstoffauftrages und der Ausbildung der gefügten Verklebung aber auch noch der nachfolgende Arbeitsparameter zu berücksichtigen, dessen sinnvoller Einsatz ein wichtiges Element im Sinne der erfindungsgemäßen Lehre sein kann: Wie schon angegeben wird es erfindungsgemäß bevorzugt, den Klebstoffauftrag bei erhöhter Temperatur der Klebstoff-bildenden Masse vorzunehmen. Hierdurch wird die Viskosität des noch nicht abreagierten Materials deutlich gesenkt und die störungsfreie Verstreichbarkeit gefördert. Die hier möglichen oberen Temperaturgrenzen sind allerdings durch die den jeweiligen Flaschenkörper und das Etikett bildenden Kunststoffe und ihre temperaturabhängigen Stoffparameter begrenzt. Der Auftrag des Rundumetiketts darf ja nicht zu einer temperaturgesteuerten Beeinträchtigung der Kunststoffwand führen. Die gleiche Überlegung gilt natürlich in verstärktem Maß beim Auftrag Kunststoffbasierter Rundumetiketten. Zu starke thermische Beanspruchung kann hier zu den unerwünschten Ausbildungen von Wellen bzw. Rippen im Verklebungsbereich führen. Geeignete Temperaturobergrenzen für den Kleberauftrag liegen dementsprechend bei maximal etwa 100°C und vorzugsweise bei Temperaturen im Bereich von 70 bis 90°C. Die in diesem Sinne heiß aufgetragene Klebstoffuge unterliegt der kurzfristigen radikalischen Reaktion unter Molekülvergrößerung, gleichzeitig tritt aber im praktischen Betrieb auch eine Abkühlung der Klebstoffmasse ein. Die damit verbundene Erhöhung der Viskosität und Haftklebrigkeit der aufgetragenen Klebstoffschicht geht nun aber gerade in die für das technische Handeln gewünschte richtige Richtung. Verständlich wird daraus, daß über die doch vergleichsweise hohe Zahl von Steuerungsparametern des zum Einsatz kommenden Klebstoff-bildenden Mehrkomponentengemisches die optimierte Erfüllung der angestrebten technischen Ergebnisse möglich ist. In diesem Zusammenhang gilt weiterhin das folgende erfindungsgemäß bevorzugte Element:

Die der Erfindung zugrundeliegenden Arbeiten haben gezeigt, daß der chemischen Grundstruktur der makromeren Binderkomponente A - die erfindungsgemäß bevorzugt ja als Hauptbestandteil im Mehrkomponentengemisch vorliegt - besondere Bedeutung auch gerade in der Frühphase des Verklebungsprozesses zukommen kann. So sind Binderkomponenten A erfindungsgemäß bevorzugt, deren Makromerstruktur Oligoester-basiert und/oder insbesondere Oligourethan-basiert ist. In Betracht kommen dabei insbesondere Binderkomponenten A dieser Art, die - im statistischen Mittel - im Makromeren-Molekül wenigstens eine Isocyanatgruppe bei gleichen oder bevorzugt geringeren Anteilen an radikalisch reaktiven olefinisch ungesättigten Gruppen aufweisen. Offenbar fördert besonders die Oligourethan-Grundkette mit ihren doch vergleichsweise zahlreichen Heteroatomen die Steigerung der Haftung auch schon gerade in der Frühphase des erfindungsgemäßen Arbeitsprozesses.

Bevorzugte Binderkomponenten A sind dementsprechend Verbindungen, die aus Isocyanat-terminierten und dabei bevorzugt kettenförmigen Oligourethanen durch anteilige Umwandlung der Isocyanatendgruppen in radikalisch reaktive olefinisch ungesättigte Substituenten hergestellt worden sind. In an sich bekannter Weise kann eine solche Umwandlung sehr einfach durch partielle Abreaktion der Isocyanatgruppen mit wenigstens eine freie Hydroxylgruppe enthaltenden Estern otefinisch ungesättigter Säuren erfolgen. Geeignet sind dabei insbesondere entsprechende Hydroxylgruppen enthaltende Ester der Acrylsäure und/oder der Methacrylsäure. Einzelheiten zu dieser grundsätzlich bekannten partiellen Modifikation des die Binderkomponente A bildenden Grundmoleküls finden sich in der eingangs genannten EP-B1 0564 483 und in dem dort ausdrücklich zitierten weiterführenden druckschriftlichen Stand der Technik.

Im Rahmen der erfindungsgemäßen Lehre hat sich gezeigt, daß als Binderkomponente A geeignete Makromergemische schon bei einer vergleichsweise beschränkten Umsetzung der im Makromeren ursprünglich vorliegenden reaktionsfähigen Isocyanatgruppen mit beispielsweise eine freie Hydroxylgruppe enthaltenden Estern olefinisch ungesättigter Säuren erhalten werden können. Dementsprechend können als Binderkomponente A Makromergemische geeignet sein, die zum überwiegenden Anteil aus Vertretern bestehen, die lediglich die Feuchtigkeits-härtenden Isocyanatgruppen als Reaktivbestandteile enthalten und nur ein vergleichsweise eingeschränkter Anteil an Vertretern der Untergruppe vorliegt, der nach den beiden unterschiedlichen Reaktionsmechanismen der radikalisch ausgelösten Abreaktion und der Feuchtigkeitshärtung abreagieren. Im Rahmen der zuvor dargestellten Herstellung der hier angesprochenen Gemische von Makromertypen kann es erfindungsgemäß bevorzugt sein, höchstens etwa 40% und insbesondere bis zu etwa 30% der vorliegenden Isocyanatgruppen durch Abreaktion in radikalisch abreagierende olefinische Substituenten am Makromeren-Molekül umzuwandeln. Besonders geeignet können Reaktivkomponenten A aus Stoffgemischen der angesprochenen Art sein, die durch eine Abreaktion von etwa 10 bis 25% der vorliegenden lsocyanatgruppen unter deren Umwandlung in radikalisch reaktive olefinische Substituenten hergestellt worden sind.

Die erfindungsgemäß bevorzugten Vertreter der Binderkomponente(n) A sind weiterhin durch zahlenmäßig beschränkte mittlere Molekulargewichte zu kennzeichnen. Bevorzugt weisen diese Makromer-Moleküle mittlere Molekulargewichte im Bereich von 700 bis 5.000 und insbesondere entsprechende Werte im Bereich von etwa 1.000 bis 2.500 auf.

Bevorzugte Vertreter für die Binderkomponente(n) B sind ebenfalls Oligomerbasiert. In Betracht kommen hier in besonders wichtigen Ausführungsformen entsprechende Acrylate und/oder Methacrylate von Oligoethern und/oder Oligoestern, deren mittleres Molekulargewicht vorzugsweise im Bereich bis maximal 2.000 und insbesondere bis maximal im Bereich 800 bis 1.000 liegt. Ausführliche Angaben zur an sich bekannten Beschaffenheit und Herstellung von insbesondere radikalisch mehrfunktionellen Komponenten dieser Art finden sich in der älteren Anmeldung der Anmelderin zu Klebstoffen mit mehrstufiger Aushärtung (Deutsche Patentanmeldung 197 54 926.8). Die Offenbarung dieses älteren Schutzrechtes der Anmelderin wird - ebenso wie die bereits ausführlich zitierte spezifische Offenbarung der EP 0 564 483 - hiermit ausdrücklich auch zum Gegenstand der vorliegenden Erfindungsoffenbarung gemacht.

In den erfindungsgemäß zum Einsatz kommenden Abmischungen von Binderkomponenten A und Binderkomponenten B sind Mischungsverhältnisse bevorzugt, in denen die Binderkomponente(n) A den überwiegenden Anteil ausmachen. So kann es bevorzugt sein, daß Binderkomponenten des Typs A wenigstens etwa 60 bis 70 Gew.-% der Abmischung der Binderkomponenten zu A und B bilden. Besonders bevorzugt kann es sein, weitaus überwiegende Anteile an Binderkomponente A dann einzusetzen, wenn als Binderkomponente B zu wenigstens substantiellem Anteil mehrfunktionelle und insbesondere bifunktionelle radikalisch reaktive Oligomerverbindungen der angegebenen Art eingesetzt werden. Hier kann es dann erfindungsgemäß bevorzugt sein, daß der Anteil der Binderkomponente(n) A im Mengenbereich von wenigstens 80 Gew.-% und insbesondere im Bereich von 90 bis 99,5 Gew.-% liegt - Gew.-% jeweils bezogen auf die Summe von Binderkomponente(n) A + Binderkomponente(n) B.

Besonders wichtig kann für die Auswahl der erfindungsgemäß zum Einsatz kommenden Reaktivkomponenten die erfindungsgemäß bevorzugte Anforderung sein, den Überlappungskleber als von flüchtigen Lösungsmitteln freies Wertstoffgemisch einzusetzen. Weiterhin bevorzugt ist es dabei, daß solche Abmischungen von Reaktivkomponenten zu A und B verwendet werden, die - im Frischzustand - im Temperaturbereich von 70 bis 90°C Schmelzviskositäten im Bereich von 500 bis 3.000 mPas und insbesondere entsprechende Schmelzviskositäten im Bereich von etwa 800 bis 2.500 mPas aufweisen.

Zur Förderung der partiellen radikalischen Abreaktion in der Frühphase der Ausbildung der Klebeverbindung eignet sich insbesondere der Einsatz von UV-Bestrahlung in Kombination mit der einschlägigen Fachwelt bekannten Initiatoren bzw. Katalysatoren. Auf das allgemeine Fachwissen kann verwiesen werden. Zahlreiche Fotoinitiatoren der hier betroffenen Art sind Handelsprodukte. In der Regel handelt es sich hierbei um Verbindungen die in der Lage sind bei Bestrahlung mit Licht einer Wellenlänge von etwa 260 bis etwa 480 mn die radikalische Abreaktion olefinisch ungesättigter Doppelbindungen zu initiieren. Lediglich beispielhaft seien im nachfolgenden eine Reihe entsprechender Produkte zitiert:

Benzophenon, Campherchinon, Quantacure (Hersteller: International Bio-Synthetics), Kayacure MBP (Hersteller: Nippon Kayaku), Esacure BO (Hersteller: Fratelli Lamberti), Trigonal 14 (Hersteller: Akzo), Photoinitiatoren der Irgacure®-, Darocure®- oder Speedcure®-Reihe (Hersteller: Ciba-Geigy, unter anderem Namen auch erhältlich von BASF, Fratelli Lamberti und Kawaguchi), Darocure® 1173 und/oder Fi-4 (Hersteller: Eastman). Insbesondere geeignet sind darunter Irgacure® 651, Irgacure® 369, Irgacure® 184, Irgacure® 907, Irgacure® 1850, Irgacure® 1173 (Darocure® 1173), Irgacure® 1116, Speedcure® EDB, Speedcure® ITX, Irgacure® 784 oder Irgacure® 2959 oder Gemische aus zwei oder mehr davon.

Wie zuvor schon angegeben kann es für die Anfangsphase der in den Verklebungsstreifen auftretenden Beanspruchungen wichtig sein, den Auftrag des Überlappungsklebers auf das Etikettenende mit Auftragstemperaturen des Klebstoffgemisches deutlich oberhalb der Wandtemperatur der zu etikettierenden Kunststoff-Flasche vorzunehmen. Hierbei sind beispielsweise Temperaturdifferenzen dieser zwei Parameter von wenigstens 20 bis 40°C bevorzugt.

Die nachfolgenden Ausführungen geben nähere Informationen zu erfindungsgemäß bevorzugten Binderkomponenten B. Solche bevorzugten Klebstoffgemische enthalten mindestens eine Verbindung mit einem Molekulargewicht von etwa 100 bis weniger als 800 bis 1.000, die mindestens zwei durch Bestrahlung mit UV-Licht oder mit Elektronenstrahlen härtbare funktionelle Gruppen aufweisen. Als Binderkomponente B sind besonders Di- oder höherfunktionelle Acrylat- oder Methacrylatester geeignet. Umfaßt sind damit beispielsweise Ester der Acrylsäure oder der Methacrylsäure mit aromatischen, aliphatischen oder cycloaliphatischen Polyolen oder Acrylatester von Polyetheralkoholen.

Geeignete aliphatische Polyole besitzen insbesondere 2 bis 4 Hydroxylgruppen pro Molekül bei 2 bis 40 C-Atomen. Die Hydroxylgruppen können sowohl primär als auch sekundär gebunden sein. Zu den geeigneten aliphatischen Polyolen zählen beispielsweise Ethylenglykol, Propandiol-1,2, Propandiol-1,3, Butandiol 1,4, Butandiol-1,3, Butandiol 2,3, die entsprechenden Butendiole sowie Pentandiole einschließlich der isomeren Pentandiole, Pentendiole oder auch Pentindiole sowie Gemische aus 2 oder mehr dieser Komponenten. Aber auch entsprechende Diole mit höherer Kohlenstoffzahl, beispielsweise Hexandiole, Heptandiole und Octandiole sowie die entsprechenden ungesättigten Verbindungen sind geeignete Grundkomponenten für den Aufbau der Binderkomponente B.

Ebenfalls geeignet sind höherfunktionelle Alkohole wie Glycerin, Trimethylolpropan, Pentaerythrit oder Zuckeralkohole. Ebenfalls geeignet sind entsprechende oligomere Ether solcher Polyole wie Oligoglycerine mit einem Oligomerisierungsgrad von etwa 2 bis 4.

Geeignete Polyolkomponenten zur Herstellung der Acrylat- oder Methacryiatester können auch die Umsetzungsprodukte niedermolekularer polyfunktioneller Alkohole mit Alkylenoxiden sein, die unter der Bezeichnung der Polyetherpolyole bekannt sind. Auf das allgemeine Fachwissen kann hier verwiesen werden. Besonders geeignet können Polyetherpolyole mit einem mittleren Molekulargewicht von etwa 100 bis 800 und vorzugsweise von etwa 150 bis etwa 400 als Grundkomponenten für die Binderkomponente B dienen.

Unter den genannten di-, tri- oder höherfunktionellen Acrylatmonomeren, die erfindungsgemäß als Binderkomponente B einsetzbar sind, können Tripropylenglykoldiacrylat, Neopentylglykolpropoxyl-di(meth)acrylat, Dimethylolpropantri(meth)acry)at und Pentaerythritol-triacrylat bevorzugt sein.

Gegebenenfalls kann der erfindungsgemäß eingesetzte Klebstoff noch Zusatzstoffe enthalten, die am gesamten Klebstoff einen Anteil von bis zu etwa 49 Gew.-% haben können. Geringere Anteile, beispielsweise bis zu etwa 30 bis 35 Gew.-% können hier bevorzugt sein.

Zu den im Rahmen der vorliegenden Erfindung einsetzbaren Zusatzstoffen zählen beispielsweise Weichmacher, Stabilisatoren, Antioxidantien, Farbstoffe oder Füllstoffe.

Als Weichmacher werden beispielsweise Weichmacher auf Basis von Phthalsäure eingesetzt, insbesondere Dialkylphthalate, wobei als Weichmacher Phthalsäure-
ester bevorzugt sein können, die mit einem etwa 6 bis etwa 12 Kohlenstoffatomen aufweisenden linearen Alkanol verestert worden sind. Andere geeignete Weichmacher sind beispielsweise entsprechende bekannte Verbindungen auf Basis Benzoat-Weichmacher und/oder Phosphat-Weichmacher, Derivate von Polyethyienglykolen, beispielsweise entsprechende Diphenylether, flüssige Harzderivate, pflanzliche und tierische Öle wie Glycerinester von Fettsäuren und deren Polymerisationsprodukte.

Zu im Rahmen der Erfindung als Zusatzstoffe einsetzbaren Stabilisatoren oder Antioxidantien zählen gehinderte Phenole hohen Molekulargewichts, polyfunktionelle Phenole und schwefel- und phosphorhaltige Phenole. Auf das allgemeine Fachwissen kann hier verwiesen werden.

Weitere Zusatzstoffe können mit aufgenommen werden, um bestimmte Eigenschaften zu variieren. Beispiele sind Farbstoffe wie Titandioxid, Füllstoffe wie Talkum, Ton und dergleichen. Gegebenenfalls können auch geringe Mengen an thermoplastischen Polymeren mitverwendet werden, beispielsweise Ethylenvinylacetat (EVA), Ethylenmethacrylat und Ethylen-n-butylacrylatcopolymere, die dem Klebstoff gegebenenfalls zusätzliche Flexibilität, Zähigkeit und Stärke verleihen. Auf das allgemeine Fachwissen kann im Zusammenhang mit solchen Zusatzstoffen grundsätzlich verwiesen werden.

### Beispiel

Es wird ein Klebstoffgemisch im Sinne der erfindungsgemäßen Lehre aus den nachfolgenden Komponenten A und B hergestellt:

### Komponente A:

Ein Polymeres mit einer NCO-Zahl von 4,4 Gew.-% (Molekulargewicht (Mₙ) etwa 2.000) wurde aus 32 Gew.-% eines Polyesters mit einem Molekulargewicht von etwa 800, 33 Gew.-% eines Polypropylenglykols mit einem Molekulargewicht von etwa 1.000, 9 Gew.-% eines Polypropylenglykols mit einem Molekulargewicht von etwa 400, 24 Gew.-% Toluylendiisocyanat (TDI) und etwa 5 Gew.-% 4,4'-Diphenylmethandiisocyanat (MDI) hergestellt. Die Viskosität des Mehrkomponentengemisches beträgt etwa 5.200 mPas (Brookfield CAP 200, 70°C, Kegel 6, 50 Upm, Meßzeit 25 s). 10% der NCO-Gruppen werden mit Hydroxyethylacrylat umgesetzt. Das so erhaltene Produkt - die erfindungsgemäße Binderkomponente A - hat eine NCO-Zahl von 4,0 und eine Viskosität von etwa 5.700 mPas.

Als Komponente B wird Polyethylenglykol-200-diacrylat eingesetzt.

Der Mischung der Komponenten A und B wird als Photoinitiator die unter dem Handelsnamen Irgacure ® 369 vertriebene Starterverbindung zugesetzt. Im einzelnen gilt hier:

100 Gewichtsteile der Komponente A werden mit 5 Gewichtsteilen der Komponente B und einem Gewichtsteil des Photoinitiators vermischt. Das Gemisch wird anschließend durch Auftrag auf eine Polyethylenterephthalat (PET)-Folie bei gleichzeitiger UV-Belichtung im Sekundenbruchteil und anschließender Fügung auf seine Haftungswerte überprüft. Die folgenden Werte wurden gemessen:
- nach 30 min 0,3 N/15 mm
- nach 7 Tagen 7 N/15 mm
- nach 14 Tagen 8 N/15 mm

## Patentansprüche

1. Verwendung von mehrstufig abreagierenden Reaktiv-Klebern auf Basis härtbarer mehrfunktioneller Makro-Monomerverbindungen (mehrfunktionelle Makromere), enthaltend in ihrer Molekülstruktur Feuchtigkeits-härtende Isocyanatgruppen, wenigstens anteilig zusammen mit olefinisch ungesättigten radikalisch reaktiven Gruppen, als reaktive und dabei nach unterschiedlichen Reaktionsmechanismen härtbare Binderkomponenten (Binderkomponente A) in Überlappungsklebstoffen für den Auftrag von Rundumetiketten auf Kunststoff-Flaschen.

2. Verwendung nach Anspruch 1, **dadurch gekennzeichnet, daß** in Abmischung mit den Binderkomponenten A 1- und/oder bevorzugt mehrfunktionell radikalisch reaktive Mischkomponenten (Binderkomponente B) eingesetzt werden, die von lsocyanatgruppen frei und dabei insbesondere radikalisch bifunktionell ausgebildet sind.

3. Verwendung nach Ansprüchen 1 und 2, **dadurch gekennzeichnet, daß** als Binderkomponente A Gemische von mehrfunktionellen Makromeren eingesetzt werden, die anteilsweise in ihrer Molekütstruktur nur Feuchtigkeits-härtende Isocyanatgruppen aufweisen, während der andere Anteil dieses Binderkomponentengemisches in seiner Molekülstruktur entsprechende tsocyanatgruppen zusammen mit den radikalisch reaktiven olefinisch ungesättigten Gruppen enthält.

4. Verwendung nach Ansprüchen 1 bis 3, **dadurch gekennzeichnet, daß** Binderkomponenten A eingesetzt werden, deren Makromerstruktur Oligoester- und/oder Oligourethan-basiert ist und dabei - im statistischen Mittel - im Makromeren-Molekül wenigstens eine Isocyanatgruppe bei bevorzugt gleichen oder auch geringeren Anteilen an radikalisch reaktiven olefinisch ungesättigten Gruppen aufweisen.

5. Verwendung nach Ansprüchen 1 bis 4, **dadurch gekennzeichnet, daß** Binderkomponenten A und B eingesetzt werden, deren radikalisch reaktive Gruppen - gewünschtenfalls unter Mitverwendung von Photoinitiatoren - durch kurzfristige Einwirkung von UV- oder Elektronenstrahlung zur Abreaktion befähigt sind.

6. Verwendung nach Ansprüchen 1 bis 5, **dadurch gekennzeichnet, daß** Abmischungen von Binderkomponenten A und Binderkomponenten B zum Einsatz kommen, in denen die Binderkomponenten A den überwiegenden Anteil, vorzugsweise =/> 60 bis 70 Gew.-% ausmachen und insbesondere der Anteil an Binderkomponenten A in seiner Abmischung mit Binderkomponente B im Bereich von 80 bis 99,5 Gew.-% liegt - Gew.-% jeweils bezogen auf die Mischung der Binderkomponenten A und B.

7. Verwendung nach Ansprüchen 1 bis 6, **dadurch gekennzeichnet, daß** Binderkomponenten A eingesetzt werden, die aus Isocyanat-terminierten, bevorzugt kettenförmigen Oligourethanen durch Umsetzung mit wenigstens eine OH-Gruppe enthaltenden (Meth)acrytaten hergestellt worden sind.

8. Verwendung nach Ansprüchen 1 bis 7, **dadurch gekennzeichnet, daß** Oligoether- und/oder Oligoester-basierte (Meth)acrylate als Binderkomponente B eingesetzt werden, deren mittleres Molekulargewicht vorzugsweise im Bereich bis maximal 2.000, insbesondere bis maximal 800 bis 1.000, liegt.

9. Verwendung nach Ansprüchen 1 bis 8, **dadurch gekennzeichnet, daß** die Binderkomponenten A mittlere Molekulargewichte im Bereich von 700 bis 5.000, vorzugsweise im Bereich von etwa 1.000 bis 2.500 aufweisen.

10. Verwendung nach Ansprüchen 1 bis 9, **dadurch gekennzeichnet, daß** von Lösungsmitteln freie Überlappungskieber eingesetzt werden, die bevorzugt - im Frischzustand - im Temperaturbereich von 70 bis 90°C Schmelzviskositäten im Bereich von 500 bis 3.000 mPas und insbesondere Schmelzviskositäten im Bereich von 800 bis 2.500 mPas aufweisen.

11. Verwendung nach Ansprüchen 1 bis 10, **dadurch gekennzeichnet, daß** die Klebstoffmischung beim Auftrag auf das innere Etikettenende und/oder im unmittelbaren Anschluß an diesen Auftrag mit energiereicher Strahlung, insbesondere mit UV bestrahlt wird.

12. Verwendung nach Ansprüchen 1 bis 11, **dadurch gekennzeichnet, daß** der Auftrag des Überlappungsklebstoffes auf das Etikettenende mit Auftragstemperaturen des Klebstoffgemisches deutlich oberhalb der Wandtemperatur der zu etikettierenden Kunststoff-Flasche vorgenommen wird, wobei Temperaturdifferenzen dieser beiden Parameter von wenigstens 20 bis 40°C bevorzugt sein können.

## Claims

1. The use of reactive adhesives reacting off in several stages based on curable polyfunctional macromonomer compounds (polyfunctional macromers) containing moisture-curing isocyanate groups - at least partly together with olefinically unsaturated radically reactive groups - in their molecular structure as reactive binder components curing by different reaction mechanisms (binder component A) in overlap adhesives for the application of wrap-around labels to plastic bottles.

2. The use claimed in claim 1, **characterized in that** mono- and/or preferably polyfunctional radically reacting mixture components (binder component B), which are free from isocyanate groups and, in particular, are bifunctional and react by a radical mechanism, are used in admixture with the binder components A.

3. The use claimed in claims 1 and 2, **characterized in that** binder component A consists of mixtures of polyfunctional macromers which partly contain only moisture-curing isocyanate groups in their molecular structure while the other part of this binder component mixture contains corresponding isocyanate groups together with the radically reacting olefinically unsaturated groups in its molecular structure.

4. The use claimed in claims 1 to 3, **characterized in that** binder components A of which the macromer structure is oligoester- and/or oligourethane-based and which - on a statistical average - contain at least one isocyanate group and preferably the same number or even smaller numbers of radically reacting olefinically unsaturated groups in the macromer molecule are used as binder components A.

5. The use claimed in claims 1 to 4, **characterized in that** binder components A and B of which the radically reacting groups are capable of reacting off by brief exposure to UV light or electron beams, optionally with the assistance of photoinitiators, are used.

6. The use claimed in claims 1 to 5, **characterized in that** mixtures of binder components A and binder components B in which the binder components A make up the predominant part, preferably 60 to 70% by weight or more, are used, the binder components A in particular making up from 80 to 99.5% by weight of the mixture of binder components A and B.

7. The use claimed in claims 1 to 6, **characterized in that** binder components A which have been prepared from isocyanate-terminated, preferably chain-like oligourethanes by reaction with (meth)acrylates containing at least one OH group are used.

8. The use claimed in claims 1 to 7, **characterized in that** oligoether- and/or oligoester-based (meth)acrylates with an average molecular weight of preferably up to at most 2000 and, more preferably, in the range from 800 to 1000 are used as binder component B.

9. The use claimed in claims 1 to 8, **characterized in that** binder components A have average molecular weights of 700 to 5000 and preferably in the range from about 1000 to 2500.

10. The use claimed in claims 1 to 9, **characterized in that** solventless overlap adhesives which, in the fresh state, have melt viscosities of 500 to 3000 mPas and, more particularly, in the range from 800 to 2500 mPas at temperatures of 70 to 90°C are used.

11. The use claimed in claims 1 to 10, **characterized in that** the adhesive mixture is exposed to high-energy radiation, more particularly to UV light, during its application to the inner label end and/or immediately thereafter.

12. The use claimed in claims 1 to 11, **characterized in that** the overlap adhesive is applied to the label end at application temperatures of the adhesive mixture well above the wall temperature of the plastic bottle to be labelled, temperature differences between these two parameters of at least 20 to 40°C being preferred.

## Revendications

1. Utilisation d'adhésifs qui réagissent en plusieurs étapes, à base de composés macromonomères multifonctionnels durcissables (macromères fonctionnels) qui contiennent dans leur structure moléculaire dès groupes isocyanate qui durcissent à l'humidité, au moins en partie avec des groupes réactifs à radicaux oléfiniquement insaturés, comme composants de liant réactifs et donc durcissables selon différents mécanismes de réaction (composants de liant A), dans des adhésifs à superposition pour l'application d'étiquettes circulaires sur des bouteilles en matière synthétique.

2. Utilisation selon la revendication 1, **caractérisée en ce que** l'on utilise en mélange avec les composants de liant A1 des composants à radicaux réactifs mono et/ou de préférence polyfonctionnels (composants de liant B) qui sont exempts de groupes isocyanate et qui sont donc en particulier à radicaux bifonctionnels.

3. Utilisation selon les revendications 1 et 2, **caractérisée en ce que** comme composant de liant A, on utilise des mélanges de macromères polyfonctionnels qui présentent dans une partie de leur structure moléculaire uniquement des groupes isocyanate qui durcissent à l'humidité, tandis que l'autre partie de ce mélange de composants de liant contient dans sa structure moléculaire des groupes isocyanate correspondants en même temps que les groupes oléfiniquement insaturés à radicaux réactifs.

4. Utilisation selon les revendications 1 à 3, **caractérisée en ce que** l'on utilise des composants de liant A dont la structure macromère est à base d'oligoesters et/ou d'oligouréthanes et, en moyenne statistique, qui présentent dans la molécule de macromère au moins un groupe isocyanate avec de préférence la même teneur ou une teneur plus faible en groupes oléfiniquement insaturés à radicaux réactifs.

5. Utilisation selon les revendications 1 à 4, **caractérisée en ce que** l'on utilise des composants de liant A et B dont les groupes à radicaux réactifs, éventuellement avec utilisation conjointe de photoinitiateurs, sont activés par action brève d'une irradiation par UV ou par des électrons.

6. Utilisation selon les revendications 1 à 5, **caractérisée en ce que** l'on utilise des mélanges des composants de liant A et des composants de liant B dans lesquels les composants de liant A forment la partie prédominante, de préférence =/>60 à 70 % en poids, et en particulier la teneur en composants de liant A en mélange avec les composants de liant B est située dans la plage de 90 à 99,5 % en poids, ces % en poids étant chaque fois calculés par rapport au mélange des composants de liant A et B.

7. Utilisation selon les revendication 1 à 6, **caractérisée en ce que** l'on utilise des composants de liant A qui ont été préparés à partir d'oligouréthanes de préférence en chaîne terminée par un isocyanate, par réaction avec au moins un méthacrylate qui contient un groupe OH.

8. Utilisation selon les revendications 1 à 7, **caractérisée en ce que** l'on utilise comme composant de liant B des (méth)acrylates à base d'oligoéthers et/ou d'oligoesters dont le poids moléculaire moyen est de préférence compris dans la plage d'au plus 2 000, et en particulier d'au plus 800 à 1 000.

9. Utilisation selon les revendications 1 à 8, **caractérisée en ce que** les composants de liant A présentent un poids moléculaire compris dans la plage de 700 à 5 000, et de préférence dans la plage d'environ 1 000 à 2 500.

10. Utilisation selon les revendications 1 à 9, **caractérisée en ce que** l'on utilise des adhésifs à superposition exempts de solvant qui, à l'état frais, présentent de préférence des viscosités à l'état fondu dans la plage de température de 70 à 90°C qui sont comprises dans la plage de 500 à 3 000 mPa.s et en particulier des viscosités à l'état fondu comprises dans la plage de 800 à 2 500 mPa.s.

11. Utilisation selon les revendications 1 à 10, **caractérisée en ce que** le mélange d'adhésif est irradié par un rayonnement actinique, en particulier par des UV, lors de l'application sur l'extrémité intérieure de l'étiquette et/ou immédiatement après cette application.

12. Utilisation selon les revendications 1 à 11, **caractérisée en ce que** l'application de l'adhésif de superposition sur l'extrémité de l'étiquette est réalisée à des températures d'application du mélange d'adhésif nettement supérieures à la température de la paroi de la bouteille en matière synthétique à étiqueter, les différences de température entre ces deux paramètres étant de préférence d'au moins 20 à 40°C.
